(19) Europäisches Patentamt

European Patent Office

Office européen des brevets

(11) Veröffentlichungsnummer: **0 244 901**
**B1**

(12) **EUROPÄISCHE PATENTSCHRIFT**

(45) Veröffentlichungstag der Patentschrift:
**31.01.90**

(21) Anmeldenummer: **87200761.2**

(22) Anmeldetag: **23.04.87**

(51) Int. Cl.⁴: **H01M 6/52, C22B 7/00**

(54) Verfahren zur Aufarbeitung von Kleinbatterien.

(30) Priorität: **26.04.86 DE 3614242**

(43) Veröffentlichungstag der Anmeldung:
**11.11.87 Patentblatt 87/46**

(45) Bekanntmachung des Hinweises auf die Patenterteilung:
**31.01.90 Patentblatt 90/5**

(84) Benannte Vertragsstaaten:
**CH DE LI**

(56) Entgegenhaltungen:
**EP-A- 0 150 081**
**EP-A- 0 158 626**
**EP-A- 0 191 752**
**DD-A- 127 945**
**FR-A- 1 082 614**
**FR-A- 2 271 872**
**US-A- 1 366 082**

**PATENT ABSTRACTS OF JAPAN, Band 6,
Nr. 95 (E-110)[973], 3. Juni 1982; &
JP-A-57 30 273 (DOUWA KOGYO K.K.) 18-02-1982**

(73) Patentinhaber: **METALLGESELLSCHAFT AG,**
**Reuterweg 14 Postfach 3724, D-6000 Frankfurt/M.1(DE)**

(72) Erfinder: **Heng, Rudolf, Grünwiesenweg 27,**
**D-6370 Oberursel(DE)**
Erfinder: **Koch, Walter, Dürerstrasse 7,**
**D-6052 Mühlheim(DE)**
Erfinder: **Pietsch, Hartmut, Dr., Feldbergstrasse 42,**
**D-6380 Bad Homburg(DE)**

(74) Vertreter: **Rieger, Harald, Dr., Reuterweg 14,**
**D-6000 Frankfurt a.M.(DE)**

## Beschreibung

Die Erfindung betrifft ein Verfahren zur Aufarbeitung von Klein-Batterien durch mechanische Zertrümmerung und Trennung in verschiedene Fraktionen.

Unter dem Begriff "Klein-Batterien" werden alle Arten kleiner Batterien verstanden, wie sie z.B. für Radios, Taschenrechner, Taschenlampen, Uhren, Hörgeräte usw. verwendet werden. Ausgeschlossen sind große Akkus, wie sie z.B. für Autos verwendet werden.

Diese Batterien enthalten metallische Bestandteile, wie z.B. Fe, Ni, Cu, Ag, Cd, aber auch chemische Verbindungen, wie z.B. Salze des Mangans oder Zink. Darüber hinaus sind gewisse Anteile an Papier und Plastikstoffen enthalten.

Bis vor einiger Zeit wurden die verbrauchten Batterien ausschließlich mit normalem Hausmüll deponiert oder verbrannt. Dadurch treten jedoch Umweltverunreinigungen auf.

In neuerer Zeit werden diese Batterien gesondert gesammelt. Ihre Vernichtung in umweltfreundlicher Weise ergibt jedoch große Schwierigkeiten.

Aus der DE-A 3 402 196 ist ein Verfahren zur Aufarbeitung solcher Batterien bekannt, bei dem die Batterien mechanisch zertrümmert und dann chlorierend geröstet werden. Der Rückstand der chlorierenden Röstung wird mit verdünnte Salzsäure enthaltender wäßriger Lösung gelaugt, wobei die NE-Metalle weitgehend in Lösung gehen und danach mit metallischem Zink auszementiert werden. Die verbleibende, Zn-haltige Lösung kann zur Herstellung von Zinksalzen verwendet werden. Mit diesem Verfahren ist eine Aufarbeitung ohne umweltschädliche Nebenprodukte möglich, jedoch erfordert die chlorierende Röstung einen gewissen Aufwand, der in manchen Fällen nicht erwünscht ist. Außerdem geht der säureunlösliche Eisengehalt des Röstgutes auf Deponie und somit verloren.

Aus der JP - A - 57-30 273 ist ein Verfahren zur Aufarbeitung von Knopfbatterien bekannt, bei dem die Batterien zunächst einer thermischen Behandlung unterworfen werden, wobei Plastikstoffe und Gummi verbrannt werden, die negative Kappe gelöst und Quecksilber verdampft wird. Anschließend erfolgt eine Zerkleinerung in einer Schlagmühle, wie z.B. einer Hammermühle, wobei die negative Kappe von dem positiven Gehäuse entfernt wird. Die Wertmetalle aus dem Gehäuse werden durch magnetische Anziehung und Siebung abgetrennt. Die unmagnetischen Kappen werden nach der Absiebung nochmals einer Zerkleinerung unterworfen. Dieses Verfahren ist nur für reine Knopfbatterien zu verwenden.

Der Erfindung liegt die Aufgabe zugrunde, ein beliebiges Gemisch von Klein-Batterien in möglichst wirtschaftlicher und umweltfreundlicher Weise zu beseitigen und dabei die NE-Metalle und den Eisengehalt möglichst weitgehend wiederzugewinnen.

Die Lösung dieser Aufgabe erfolgt erfindungsgemäß dadurch, daß bei der mechanischen Zertrümmerung im wesentlichen nur die Metallumhüllung der Klein-Batterien ohne Verschmiedung von Eisen und den NE-Metallen aufgerissen wird, das zertrümmerte Material in oxidierender Atmosphäre bei 500 bis 1000°C unter Bewegung behandelt wird, aus dem Abgas das verflüchtigte Quecksilber gewonnen wird, das Röstgut der thermischen Behandlung durch Siebung in eine Feinfraktion, eine Mittelfraktion und eine Eisen enthaltende Grobfraktion getrennt wird, die Mittelfraktion einer zweiten mechanischen Zertrümmerung unterworfen wird, das Austragsmaterial in einer zweiten Siebung in eine Feinfraktion und eine gröbere Fraktion getrennt wird, die gröbere Fraktion in einer dritten Stufe zerkleinert wird, das Austragsmaterial in einer dritten Siebung in eine Feinfraktion und eine gröbere Fraktion getrennt wird, die gröbere Fraktion durch Magnetscheidung in eine Messing enthaltende Schrott-Fraktion und eine Eisen enthaltende Fraktion getrennt wird und die Feinfraktionen als Mangan, Zink und Silber enthaltende Sammel-Fraktion abgeführt werden. Die mechanische Zertrümmerung erfolgt in der Weise, daß im wesentlichen nur die Metallumhüllungen aufgerissen werden. Dabei entstehen grobe Metallteile neben dem freigelegten Batterieinhalt. Das Eisen und die NE-Metalle, wie z.B. Cu und Zn, werden nicht miteinander verschmiedet, wie bei einer weitgehenden Zerkleinerung in einer Hammermühle. Bei der anschließenden oxidierenden Röstung wird praktisch alles Quecksilber verflüchtigt und brennbare Bestandteile, wie z.B. Papier, Plastik und Graphit, werden verbrannt. Das Quecksilber wird aus dem Abgas nach bekannten Methoden gewonnen. Der Eisengehalt sammelt sich weitgehend in der Eisen enthaltenden Schrott-Fraktion an. Die Messing enthaltende Schrott-Fraktion besteht überwiegend aus Zink und Kupfer. Die Sammel-Fraktion enthält in größeren Mengen Mangan und Zink, praktisch das gesamte Silber sowie den größten Teil der restlichen NE-Metalle. Diese Sammel-Fraktion kann zur Trennung der Wertmetalle einer Laugung zugeführt werden.

Eine vorzugsweise Ausgestaltung besteht darin, daß die mechanische Zertrümmerung in einer Prallmühle erfolgt. Eine Prallmühle erfüllt in sehr guter Weise die Anforderungen an die Zerkleinerung.

Eine vorzugsweise Ausgestaltung besteht darin, daß die thermische Behandlung des zertrümmerten Materials in einem Etagenofen erfolgt. Ein Etagenofen erfüllt in sehr guter Weise die Anforderungen an die oxidierende Röstung unter gleichzeitiger Reinhaltung der Atmosphäre von gas- oder dampfförmigen Röstprodukten.

Die Grobfraktion der ersten Siebung und die magnetische Fraktion der Magnetscheidung ergeben die Eisen enthaltende Schrott-Fraktion. Die unmagnetische Fraktion der Magnetscheidung ergibt die Messing enthaltende Schrott-Fraktion. Die erste und zweite mechanische Zerkleinerung kann in zwei separaten Prallmühlen erfolgen. Sie können aber auch in einer Prallmühle mit veränderbarer Spaltbreite mit chargenweiser Arbeitsweise erfolgen. Die dritte Zerkleinerungsstufe erfolgt in einer weitgehenden Aufmahlung. Durch diese Arbeitsweise wird eine weitgehende Trennung und Konzentrierung in den Fraktionen erzielt.

Eine vorzugsweise Ausgestaltung besteht darin, daß die Absiebung der Feinfraktion in einer Korngröße von I bis 2 mm erfolgt, und die Absiebung der Mittelfraktion der ersten Siebung in einer Korngröße bis zu 20 mm erfolgt. Diese Siebschnitte ergeben besonders gute Trennergebnisse.

Eine vorzugsweise Ausgestaltung besteht darin, daß die dritte Stufe der Zerkleinerung in einer Stab- oder Kugelmühle erfolgt. Diese Mühlen erfüllen sehr gut die Anforderungen an die Aufmahlung in der dritten Zerkleinerungsstufe.

Die Erfindung wird anhand eines Beispiels näher erläutert.

Die Batterien hatten folgende Zusammensetzung:

| | |
|---|---|
| Feuchte | ~5% |
| Fe | 18% |
| SiO$_2$ | 0,66% |
| Al$_2$O$_3$ | 0,44% |
| CaO | 0,2% |
| K | 1,05% |
| Mn | 16,1% |
| Cr | 0,01% |
| Ni | 0,1% |
| Pb | 0,06% |
| Zn | 18,0% |
| Cu | 0,54% |
| Cd | 0,008% |
| Hg | 0,182% |
| Ag | 174 g/t |
| C$_{ges.}$ | ~10% |
| S$_{ges.}$ | 0,08% |
| Cl | 2,8% |

Die erste mechanische Zertrümmerung erfolgte in einer Prallmühle. Anschließend wurde das zerkleinerte Material in einem Etagenofen bei oxidierender Atmosphäre geröstet, wobei die maximale Temperatur 800°C betrug. Das Abgas enthielt I4,I7 % des eingesetzten Materials. Das Röstgut wurde in eine Feinfraktion von unter I mm, eine Mittelfraktion von I bis 20 mm und eine Grobfraktion von über 20 mm abgesiebt. Die Feinfraktion bestand aus 48,I % des Einsatzes, die Mittelfraktion aus 2I,66 % und die Grobfraktion aus I6,07 %. Die Mittelfraktion wurde zur zweiten mechanischen Zertrümmerung in eine Prallmühle mit geringer Spaltbreite geleitet und anschließend in einer zweiten Siebung in eine Feinfraktion von unter I mm und eine gröbere Fraktion von über I mm abgesiebt. Die Feinfraktion bestand aus II,9 % des Einsatzes und die gröbere Fraktion aus 9,73 %. Die gröbere Fraktion wurde in der dritten Stufe in einer Stabmühle zerkleinert und danach in einer dritten Siebung in eine Feinfraktion von unter I mm und eine gröbere Fraktion von über I mm abgesiebt. Die Feinfraktion bestand aus 6,I % des Einsatzes und die gröbere Fraktion aus 3,63 %. Die gröbere Fraktion wurde in einer Magnetscheidung in eine Messing enthaltende Schrott-Franktion von

I,03 % des Einsatzes und in eine Eisen enthaltende Schrott-Fraktion von 2,6 % des Einsatzes getrennt.

Die aus den vereinigten Feinfraktionen bestehende Sammel-Fraktion hatte folgende Zusammensetzung:

| | |
|---|---|
| Fe | 8% |
| SiO$_2$ | 4,3% |
| Al$_2$O$_3$ | 0,73% |
| CaO | 1,9% |
| K | 2,2% |
| Mn | 20,8% |
| Cr | 0,46% |
| Ni | 0,85% |
| Pb | 0,08% |
| Zn | 26,5% |
| Cu | 0,3% |
| Cd | 0,12% |
| Hg | 0,029% |
| Ag | 318 g/t |
| C$_{ges.}$ | 5,6% |
| S$_{ges.}$ | 1,0% |
| Cl | 4,2% |

Die Messing enthaltende Fraktion der Magnetscheidung hatte folgende Zusammensetzung:

| | |
|---|---|
| Fe | 3,77% |
| Mn | 0,16% |
| Cr | 0,86% |
| Ni | 1,98% |
| Pb | 0,02% |
| Zn | 34,25% |
| Cu | 57,67% |
| Cd | 0,002% |
| Ag | 7,4 g/t |

Die aus der Grobfraktion der ersten Siebung und der magnetischen Fraktion der Magnetscheidung bestehende, Eisen enthaltende Schrott-Fraktion hatte folgende Zusammensetzung:

| | |
|---|---|
| Fe | 87,7% |
| Mn | 1,6% |
| Ni | 0,06% |
| Pb | 0,01% |
| Zn | 2,33% |
| Cu | 0,06% |
| Cl | 1,07% |

Die Vorteile der Erfindung bestehen darin, daß beliebige Klein-Batterien in Fraktionen mit hoher Anreicherung einzelner Wertmetalle aufgearbeitet werden können, wobei alle Metalle wiedergewonnen werden können und die Entsorgung ohne Umweltprobleme erfolgen kann.

**Patentansprüche**

1. Verfahren zur Aufarbeitung eines Gemisches von Klein-Batterien durch mechanische Zertrümmerung und Trennung in verschiedene Fraktionen, dadurch gekennzeichnet, daß bei der mechanischen Zertrümmerung im wesentlichen nur die Metallumhüllung der Klein-Batterien ohne Verschmiedung von Eisen mit den NE-Metallen aufgerissen wird, das zertrümmerte Material in oxidierender Atmosphäre bei 500 bis 1000°C unter Bewegung behandelt wird, aus dem Abgas das verflüchtigte Quecksilber gewonnen wird, das Röstgut der thermischen Behandlung durch Siebung in eine Feinfraktion, eine Mittelfraktion und eine Eisen enthaltende Grobfraktion getrennt wird, die Mittelfraktion einer zweiten mechanischen Zertrümmerung unterworfen wird, das Austragsmaterial in einer zweiten Siebung in eine Feinfraktion und eine gröbere Fraktion getrennt wird, die gröbere Fraktion in einer dritten Stufe zerkleinert wird, das Austragsmaterial in einer dritten Siebung in eine Feinfraktion und eine gröbere Fraktion getrennt wird, die gröbere Fraktion durch Magnetscheidung in eine Messing enthaltende Schrott-Fraktion und eine Eisen enthaltende Fraktion getrennt wird und die Feinfraktionen als Mangan, Zink und Silber enthaltende Sammel-Fraktion abgeführt werden.

2. Verfahren nach Anspruch 1, dadurch gekennzeichnet, daß die mechanische Zertrümmerung in einer Prallmühler erfolgt.

3. Verfahren nach Anspruch 1 oder 2, dadurch gekennzeichnet, daß die thermische Behandlung des zertrümmerten Materials in einem Etagenofen erfolgt.

4. Verfahren nach Anspruch 1, dadurch gekennzeichnet, daß die Absiebung der Feinfraktion in einer Korngröße von 1 bis 2 mm erfolgt, und die Absiebung der Mittelfraktion der ersten Siebung in einer Korngröße bis zu 20 mm erfolgt.

5. Verfahren nach Anspruch 1, dadurch gekennzeichnet, daß die dritte Stufe der Zerkleinerung in einer Stab- oder Kugelmühle erfolgt.

**Claims**

1. A method of processing small batteries by mechanical disintegration and separating into different fractions, characterized in that the mechanical disintegration effects substantially only a tearing apart of the metal sheath of the small batteries without forging together iron with non-ferrous metals, the disintegrated material is treated in a state of motion in an oxidizing atmosphere at 500 to 1000°C, the volatile mercury is recovered from the exhaust gas, the roasted material obtained by the heat treatment is separated by sieving into a fine fraction, a medium fraction and an iron-containing coarse fraction, the medium fraction is subjected to a second mechanical disintegration, the discharged matter is separated by a second sieving step into a fine fraction and a coarser fraction, the coarser fraction is subjected to a third disintegrating step, the discharged matter is separated by a third sieving step into a fine fraction and a coarser fraction, the coarser fraction is separated by magnetic separation into a brass-containing scrap fraction an an iron-containing fraction and the fine fraction is delivered as a collectable fraction which contains manganese, zinc and silver.

2. A method according to claim 1, characterized in that the mechanical disintegration is effected in an impact crusher.

3. A process according to claim 1 or 2, characterized in that the heat treatment of the disintegrated material is effected in a multiple-bed furnace.

4. A process according to claim 1, characterized in that the fine fractions obtained by the sieving steps have a particle size of 1 to 2 mm and the medium fraction obtained by the first sieving step has a particle size up to 20 mm.

5. A process according to claim 1, characterized in that the third disintegrating step is effected in a rod mill or ball mill.

**Revendications**

1. Procédé pour retraiter un mélange de petites piles par destruction mécanique et séparation en diverses fractions, caractérisé par le fait que lors de la destruction mécanique essentiellement seule l'enveloppe métallique des petites piles est déchirée sans corroyage du fer avec les métaux non ferreux, que le matériau détruit en morceaux est traité en mouvement en atmosphère oxydante à 500 à 1000°C, qu'à partir des gaz effluents on récupèr le mercure évaporé, que le produit de grillage du traitement thermique est séparé par tamisage en une fraction fine, en une fraction moyenne et en une fraction grossière contenant du fer, que la fraction moyenne est soumise à une seconde destruction mécanique, que le matériau en résultant est séparé par un second tamisage en une fraction fine et en une fraction plus grossière, que la fraction plus grossière est fragmentée lors d'une troisième étape, que le matériau en résultant est séparé, lors d'un troisième tamisage, en une fraction fine et en une fraction plus grossière, que la fraction plus grossière est séparée par triage magnétique en une fraction de mitraille contenant du laiton et en une fraction contenant du fer et que les fractions fines sont évacuées en tant que fraction cumulative contenant du manganèse, du zinc et de l'argent.

2. Procédé selon la revendication 1, caractérisé par le fait que la destruction mécanique est opérée dans un broyeur à chocs.

3. Procédé selon la revendication 1 ou 2, caractérisé par le fait que le traitement thermique du matériau détruit est opéré dans un four à étages.

4. Procédé selon la revendication 1, caractérisé par le fait que le tamisage de la fraction fine est opéré avec un grosseur de grains de 1 à 2 mm et que le tamisage de la fraction moyenne du premier tamisage est opéré avec une grosseur de grains allant jusqu'à 20 mm.

5. Procédé selon la revendication 1, caractérisé par le fait que la troisième étape de la fragmentation est opérée dans un broyeur à barres ou à boulets.